# EUROPEAN PATENT APPLICATION

(11) **EP 2 202 020 A1**
(43) Date of publication of application: **30.06.2010**
(21) Application number: 09251982.6
(22) Date of filing: 12.08.2009
(51) Int. Cl.: B23F 1/06, B23F 21/20

(54) **Universal tool and inserts for milling splines and a method for milling splines**

(30) Priority: 29.12.2008 US 317735
(71) Applicant: Frecska, Laszlo, Spring Grove, IL 60081 (US); Hartford, James, Silver Lake, Wisconsin 53170 (US)
(72) Inventor: Frecska, Laszlo, Spring Grove, IL 60081 (US); Hartford, James, Silver Lake, Wisconsin 53170 (US)
(74) Representative: Howe, Steven

(57) **Abstract**

The invention discloses an improved tool and inserts for concurrently milling multiple splines on a round (rod) material. Replaceable inserts having teeth formed to have their cutting edges shaped in the arc of a circle are disclosed. The inserts each include at least two sets of rough milling teeth and a fine set of milling teeth. The tool holder shank includes recesses which provide a common or universal unit for receiving various sized groupings, each comprising an insert, a wedge for securing the insert, and a supporting member for the insert.

## Description

### Background of Invention

This application is related to U.S. Patent No, 7,425,108 entitled "Method for Milling Splines" issued to the same inventors herein. The present invention is of the general type disclosed in U.S. Pat. No. 5,112,162 titled "Thread Mill Cutter Assembly" also issued to the same inventors hereof.

### Summary of Invention

The invention discloses an improved tool and inserts for concurrently milling multiple splines on a round (rod) material. Replaceable inserts having teeth formed to have their cutting edges shaped in the arc of a circle are disclosed. In use, the inventive inserts are mounted on the tool holder of a thread milling tool; the tool holder includes an elongated, mounting recess for accommodating the inserts. The inserts each include three sets of cutting teeth; the first set of teeth for rough milling the metal, the second set is essentially a duplicate of the first set to provide a double or extended use of the insert, and the third set of teeth provides the finished milling. The tool includes standard sized recesses around its periphery to accommodate respective groups of inserts, their support members and wedges to provide a universal tool adapted to receive various different inserts.

The foregoing features and advantages of the present invention will be apparent from the following more particular description of the invention. The accompanying drawings, listed herein below, are useful in explaining the invention.

### Drawings

FIG. 1 is a view of the inventive thread milling tool and the inventive inserts mounted on the tool;
FIG. 2 is an end view of the inserted mounted on the thread milling tool;
FIG. 3 is an end view showing splines threaded on a round shaft or rod;
FIG. 4 is a side view of an insert to show three sets of teeth on the insert;
FIG. 5 shows a wedge used in mounting the inserts;
FIG. 6 shows the support used in mounting the inserts on the thread milling tool;
FIG. 7 is an isometric view of the inserts mounted on the thread milling tool; and
FIG. 8 is an isometric view of an involute spline being inserted into an associated hollow shaft.

### Description of the Invention

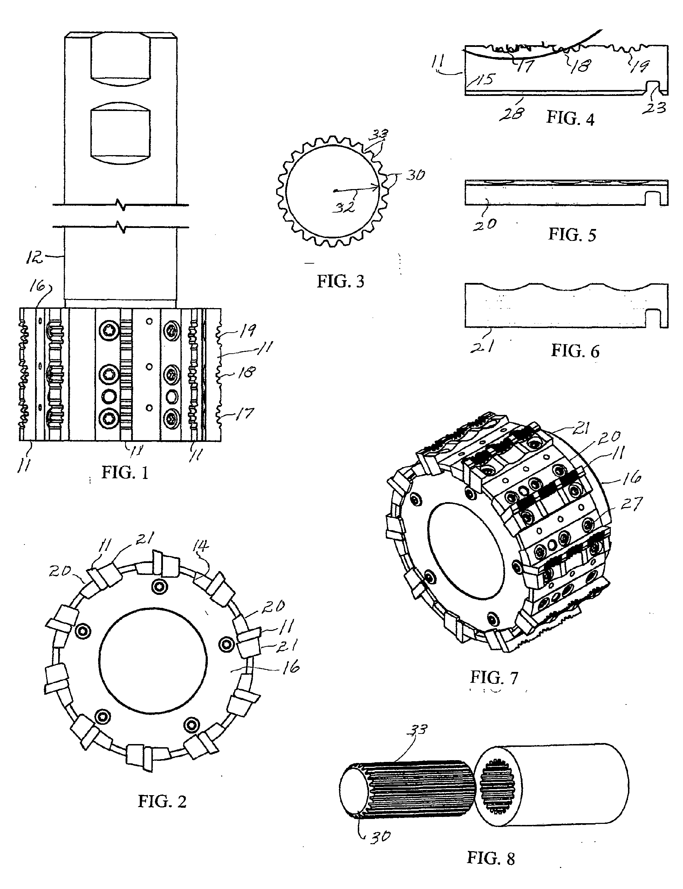

Fig. 1 shows the replaceable inventive inserts 11 mounted on the inventive tool holder 12. The tool holder 12 may be generally of the type of tool holder disclosed in U.S. Pat. No. 6,457,381 issued to the same inventors hereof. Tool holder 12 is designed to receive and mount a plurality of the inventive inserts 11 in respective recesses 14 (see Fig. 2) formed on the free end of a standard type shank 16 on tool holder 12. In the embodiment of the invention described herein and as shown in Figs. 2 and 7, a total of ten groups/groupings of inserts are mounted on shank 16. Fig. 4 shows a side view of one of the inserts 11 which inserts are made of carbide material; each insert comprises an essentially rectangular bar 15, see Figs 2 and 4. In one embodiment, the dimensions of an inserts are 1.5 inches (about 4cm) in length, 3/8 inches (about 1cm) in height and 1/8 inch (about 3mm) width. The cutting edges of the inserts 11 are positioned on shank 16 to extend radially outwardly of the periphery of the shank, see FIGS. 2 which shows an end view 5 of the inserts 11, as mounted on the shank 16 of the tool holder.

A keying slot 23, see Fig. 4, is formed in each of the inserts 11 to engage a respective positioning shoulder in shank 16. Also, for ease in assembly, the edges of the bar forming the insert 11 may have slightly bevelled edges as at 28.

Figs. 1 and 4 most clearly show the cutting projections or teeth of insert 11. In the embodiment of insert 11 shown in the drawings, each of the inserts includes three sets of teeth 17, 18 and 19. Each set of teeth is formed in an arc of a circle, and each set of teeth mills three splines concurrently. The teeth are formed and arranged to mill a selected size and shape of splines on a rod or shaft having a corresponding radius.

As noted above, Fig. 4 shows that each set of teeth 17, 18 and 19 in the inserts 11 is formed to have its cutting edges or milling contour form the arc of a circle. Referring also to Fig. 3, each set of teeth is designed to form an arc of a circle having a radius 32 and a contour that corresponds to the radius of the round rod material 30 being milled. In the embodiment shown in Figs 1-7, three (3) splines 33 are milled concurrently by the inserts, although more or less splines could be milled concurrently.

As is described in US Patent No. 7,425,108, the rod 30 being milled to form the splines 33 is held in a stationary position by known types of spindles. The tool holder 12 and shank 16 with inserts 11 are positioned to be normal (perpendicular) to the longitudinal axis of the rod material 30 that is being milled. Accordingly, during each sub-operation of a CNC (computer numerical control) machine and as the rotating tool holder 12 is driven to mill the material, one of the sets of inserts 17 or 19 rough mills a 10 set of three splines 33 in rod 30.

The inserts 11 are mounted on tool holder 12 to have teeth set 17 at the end of the distal end of shank 16 to provide a first or rough milling of the grooves forming splines 33. The CNC machine on which the tool holder 12 is mounted moves the rotating inserts 11 to cause the set of teeth make a milling pass in a perpendicular direction relative to the longitudinal axis of rod 30 thereby causing three splines 33 to be milled concurrently on the rod 30. Next, the rod 30 is repositioned or indexed, that is turned, by CNC machine. The tool holder 12 is returned to an initial position and the process is repeated to rough mill a second set of three splines 33. The process is continuously repeated to mill three splines 33 at a time until the full complement of splines on the circumference of the rod 30 is milled. Next, the tool holder 12 is positioned by the CNC machine such that teeth set 18 initiate the finish milling for three of the rough milled splines concurrently. A similar sequence or operation of the CNC machine as described above is programmed to provide the finished milling. The finished rod 30 with an involute spline is indicated in Fig. 8.

Other modes or sequence for the milling process can be used, the principal concept being that multiple splines are milled concurrently.

The set of teeth 19 at the other end of insert 11 also provides a first or rough milling cut for forming splines 33. Set 19 is used after the set 17 is worn or teeth are broken. The CNC machine is easily programmed to move this second set of teeth 19 to make the milling cuts on the rod material. This capability of making more than one set of rough milling teeth on one insert essentially provides a double life or usage for insert 11.

The centre set of teeth 18 which provides a fine or finishing cut, generally does not undergo the high degree of stress or wear of the rough cut sets of teeth 17 and 19. The fine milling sets 18 normally last or are useful for more than double the number of operations compared to the teeth making the rough cuts. Hence only one set of the milling teeth 18 are formed on each insert 11.

Refer now also to Fig. 7 as well as to Figs. 1 and 2, the inventive inserts 11 are mounted in respective recesses 14 spaced around the circumference of shank 16 and in respective groupings. Each grouping of inserts comprises an inventive insert 11, a wedge 20 and a support member 21 for the insert. Fig. 5 shows a side view of wedge 20 which is an elongated steel bar of substantially the same length as insert 11, and is of a reduced height relatively to insert 11 and is affixed to the shank 16 by suitable screws 27. Fig. 7 shows a side view of support member 21 which is also a rectangular bar of essentially the same length of the upper edge of insert 11 and is of slightly reduced height and contour as the insert. As seen in Fig. 2, the width of support 21 is essentially twice the width of insert 11. Support member 21 is made of steel and provides a strong support (brace) for the insert 11. This support for insert 11 is provided due to the fact the insert 11 undergoes significant stress because the insert is milling multiple cuts in the material being milled. That is, more stress is developed on an insert when the insert is making multiple cuts on the material as compared to the stress developed when an insert is making a single cut or pass on the material.

Refer now also to FIG. 5 as well as Figs. 1 and 2. Fig. 5 is an isometric view of the inserts 11 mounted on the tool holder shank 16. Shank 16 includes elongated spaced recesses or slots 14 (see Fig. 2) radially spaced on shank 16 for receiving inserts 11 and associated wedges 20 and support members 21. The tool holder shank 16 can be a universal unit having standard shaped recesses, and the wedges 20 and support members 21 can be dimensioned dependent on the shape and size of the inserts being used. Thus, the reduction in materials and inventory of tool holders is obvious. The foregoing features, in addition to the fact that the inserts having at least two sets of rough milling teeth effectively provide a double use of the inserts, result in substantial savings and convenience for the user. Another principal advantage is that inserts do not have to be changed as often as with previous inserts and thus provide a significant labour savings. Stoppage of the CNC machine to change inserts results in loss in production. Thus, the inventive inserts and universal tool holder provide improved features and advantages for the user.

While the invention has been particularly shown and described with reference to preferred embodiments thereof, it will be understood by those skilled in the art that various changes in form and details may be made therein without departing from the scope of the invention.

## Claims

1. A replaceable insert for mounting on a tool holder for concurrently thread milling multiple involute splines on round material of a given radius, said insert comprising in combination:
a) an elongated rectangular bar having at least three sets of milling teeth, each set of teeth having their cutting edges formed in the arc of a circle corresponding to the arc of the circle of said round material on which the splines are to be cut;
b) said first and second sets of teeth being formed to rough mill said splines; and,
c) said third set of teeth being formed to finish mill the splines which one of the other sets of teeth has rough milled.

2. An insert according to claim 1, wherein said insert as one of a plurality of inserts mounted in a universal tool holder suitable for mounting inserts of different configuration in respective recesses in said tool holder and wherein an insert is mounted in a respective recess as one component of a grouping comprising a wedge suitably affixed to said tool holder in said respective recess as by screws, and a support member of similar configuration as said insert mounted in said respective tool holder recess to brace said insert against the forces and stress developed in said milling operation.

3. An insert according to claim 1 or claim 2, wherein said first and second sets of milling teeth are formed on opposite ends of said elongated bar insert and said third set of milling teeth are formed in essentially the middle of said bar insert.

4. An insert according to any one of the preceding claims, wherein said insert is of a carbide material in the form of a rectangular bar and said support member is of steel and has essentially the same top side contour as said insert.

5. An insert according to any one of the preceding claims, arranged to mill three splines concurrently.

6. A tool holder for mounting replaceable elongated inserts for concurrently thread milling multiple involute splines on round material of a given radius,
a) said tool holder comprising a shaft, and a shank on the end of said shaft; elongated recesses formed longitudinally on the periphery of said shank for receiving and mounting said inserts;
b) said inserts each having three sets of milling teeth, each set of teeth having their cutting edges formed in the arc of a circle corresponding to the arc of the circle of said round material on which the splines are to be cut;
c) said elongated recesses in said insert having a selected standard width for receiving and mounting a respective grouping of components including an insert, a wedge and a supporting member for said insert;
d) said standard dimension of said recesses allowing the overall width dimensions of each member of said grouping to be varied so long as the total width of components conforms to the width dimension of said recesses.

7. A tool holder for mounting replaceable elongated inserts for concurrently thread milling multiple involute splines on round material of a given radius,
a) said tool holder comprising a shaft, and a shank on the end of said shaft; elongated recesses formed longitudinally on the periphery of said shank for receiving and mounting said inserts;
b) said inserts each having two sets of rough milling teeth and one set of finish milling teeth;
c) each set of teeth having their cutting edges formed in the arc of a circle corresponding to the arc of the circle of said round material on which the splines are to be cut; and
d) said elongated recesses in said insert width for receiving and mounting a respective grouping of components including an insert, a wedge and a supporting member for said insert.

8. A method of milling involute splines on a round elongate material comprising:
a) providing inserts having a section of multiple teeth formed in an arc with a radius to match the arc of the radius of the material to be milled;
b) mounting said inserts on a tool holder;
c) mounting said tool holder in a machine to enable said inserts to mill said spline in a longitudinal direction in the round material and parallel to the axis of the round material;
d) positioning said section of teeth to mill a plurality of grooves for the splines concurrently; and
e) after a plurality of grooves of splines are milled, indexing said material an amount proportional to the number of grooves being milled concurrently and milling a second plurality of grooves for splines.

9. A method according to claim 8, wherein said milling inserts have two separate sections of teeth,
a) milling said round material with a first section of teeth to provide rough milled grooves for forming said splines;
b) positioning said tool holder to mill said rough milled grooves with said second or other section of teeth to mill multiple splines concurrently to provide finished grooves for said splines.

10. A method according to claim 9, further including the step of
a) repeating said steps of rough milling and then fine milling said splines.

11. A method according to any one of claims 8 to 10, further comprising steps of
a) providing inserts which are replaceable inserts;
b) mounting said inserts in recesses of a tool holder to have the teeth extending outwardly of the periphery of the tool holder; and
c) mounting said tool holder in a machine to enable said inserts to concurrently mill multiple splines in a longitudinal direction.

12. Inserts for a milling tool holder wherein said tool holder includes elongated recesses for receiving said inserts; said inserts each comprising
a) an elongated rectangular bar having two sections of cutting teeth on one side of the bar for milling round material having a given radius;
b) said two sections of teeth having their cutting edges formed in an arc of circle to match the radius of said material being milled, said two sections teeth being longitudinally spaced from one another;
c) said tool holder positioning said first section of teeth to concurrently rough mill a plurality of longitudinal grooves on said material to form splines; and
d) said tool holder next moving said tool holder for positioning said second section of teeth to concurrently finish mill to said material.
